Europäisches Patentamt

European Patent Office

Office européen des brevets

(11) Veröffentlichungsnummer: **0 170 124**
**A2**

(12) # EUROPÄISCHE PATENTANMELDUNG

(21) Anmeldenummer: **85108657.9**

(22) Anmeldetag: **11.07.85**

(51) Int. Cl.⁴: **B 60 C 25/02**
**B 60 C 25/06**

(30) Priorität: **28.07.84 DE 3428010**

(43) Veröffentlichungstag der Anmeldung:
**05.02.86 Patentblatt 86/6**

(84) Benannte Vertragsstaaten:
**AT BE CH DE FR GB IT LI LU NL SE**

(71) Anmelder: **Continental Gummi-Werke**
**Aktiengesellschaft**
**Königsworther Platz 1**
**D-3000 Hannover 1(DE)**

(72) Erfinder: **Rach, Heinz-Dieter, Dipl.-Ing.**
**Planetenring 32**
**D-3008 Garbsen 1(DE)**

(72) Erfinder: **Frerichs, Udo, Dipl.-Ing.**
**Buchenweg 7**
**D-3012 Langenhagen 8(DE)**

(72) Erfinder: **Klose, Hans-Ulrich, Dipl.-Ing.**
**Hauptstrasse 15**
**D-3061 Wiedensahl(DE)**

(72) Erfinder: **Boltze, Carsten, Dipl.-Ing.**
**Buschweg 7**
**D-3015 Wennigsen(DE)**

(54) **Verfahren und Vorrichtung zur Demontage von Fahrzeugluftreifen.**

(57) Die Erfindung bezieht sich auf ein Verfahren zur Demontage von Fahrzeugluftreifen, deren Wülste sich im montierten Zustand am radial inneren Umfang der Felge befinden, die ein Montagehochbett und seitlich außen sich im wesentlichen nach radial innen erstreckende Felgenhörner aufweist, und auf eine Vorrichtung zur Durchführung des Verfahrens. Für ein besonders reifenschonendes Demontageverfahren wird vorgeschlagen, daß zunächst ein Abschnitt eines Reifenwulstes in das Montagehochbett gedrückt wird und daß danach der gegenüberliegende Abschnitt desselben Reifenwulstes über das Felgenhorn gehoben wird.

FIG. 1

Continental Gummi-Werke Aktiengesellschaft, Hannover

Verfahren und Vorrichtung zur Demontage von Fahrzeugluftreifen

Die Erfindung betrifft ein Verfahren zur Demontage von Fahrzeugluftreifen, deren Wülste sich im montierten Zustand am radial inneren Umfang der Felge befinden, die ein Montagehochbett und seitlich außen sich im wesentlichen nach radial innen erstreckende Felgenhörner aufweist, und eine Vorrichtung zur Durchführung des Verfahrens.

Ein Fahrzeugrad, bei dem der Reifen mit seinen Wülsten in der genannten Weise radial innen an der Felge befestigt ist, wird zum Beispiel in der DE-OS 30 00 428 und in der DE-OS 30 19 742 beschrieben. Die bekannten Reifendemontagevorrichtungen lassen sich bei den angesprochenen Fahrzeugluftreifen nicht einsetzen, weil die Verhältnisse bei einem radial außen auf der Felge befestigten Reifen prinzipiell anders sind.

Der Erfindung liegt deshalb die Aufgabe zugrunde, ein Verfahren anzugeben, mit dem eine möglichst reifenschonende Demontage von Fahrzeugluftreifen bei Fahrzeugrädern der eingangs genannten Art ermöglicht wird, und eine Vorrichtung zur Durchführung des Verfahrens zu entwickeln.

Diese Aufgabe wird erfindungsgemäß dadurch gelöst, daß zunächst ein Abschnitt eines Reifenwulstes in das Montagehochbett gedrückt wird und daß danach der gegenüberliegende Abschnitt desselben Reifen-

0170124

wulstes über das Felgenhorn gehoben wird.

Eine Vorrichtung zur Durchführung des Verfahrens ist gekennzeichnet durch ein Mittel zum Hineindrücken eines Reifenwulstes in das Montagehochbett und durch ein weiteres Mittel zum Anheben des gegenüberliegenden Reifenwulstabschnittes über das Felgenhorn.

Der Erfindung liegt vor allem die Erkenntnis zugrunde, daß es für eine reifenschonende Demontage nicht tragbar ist, bei einem Fahrzeugrad der eingangs genannten Art einen Demontagehaken einfach am Reifenwulst angreifen zu lassen und dann mit einer großen Kraft den Wulst über das Felgenhorn zu hebeln, sondern daß es vielmehr entscheidend ist, vorher einen gegenüberliegenden Wulstabschnitt zumindest teilweise in das Montagehochbett hineinzudrücken. Durch diese Maßnahme erreicht man eine Verlagerung des zug- und druckfesten Kernrings aus der konzentrischen Lage zum vom Felgenhorn gebildeten Kreis, so daß der Reifenwulst auf der gegenüberliegenden Seite seines ins Hochbett eingetauchten Abschnitts auf einfachste Weise über das radial nach innen stehende Felgenhorn hinweggehoben werden kann.

Das Eintauchen des einen Wulstabschnitts und das Überbrücken des Felgenhorns durch den gegenüberliegenden Wulstabschnitt kann mit Hilfe zweier getrennter Bewegungsabläufe oder auch durch einen einzigen Bewegungsablauf erfolgen.

Bei zwei Bewegungsabläufen kann das Eintauchen des einen Wulstabschnitts in vorteilhafter Weise durch ein an einer Montiervorrichtung bereits vorhandenes Mittel vorgenommen werden, z. B. durch eine antreibbare Rolle oder einen verschiebbaren Montagelöffel.

In einem anderen Fall, bei dem gemäß einem bevorzugten Ausführungsbeispiel ein manuell betätigbarer Kniehebel zum Einsatz kommt, wird bei einem einzigen Bewegungsablauf im ersten Teil der Bewegung ein Reifenwulstabschnitt in das Montagehochbett gedrückt, während im zweiten Teil der gegenüberliegende Wulstabschnitt über das Felgenhorn gehoben wird. Eine Vorrichtung mit einem Kniehebel wurde deshalb gewählt, weil mit ihm beide Bewegungen mit Hilfe einer einzigen Drückbewegung durchgeführt werden, die darüber hinaus vom Kraftaufwand und Bedienungskomfort den Gegebenheiten des menschlichen Körpers gerechter wird als eine Ziehbewegung.

Vorteilhafte Ausgestaltungen der Erfindung sind den Unteransprüchen zu entnehmen.

Nachfolgend wird die Erfindung anhand von zwei Ausführungsbeispielen, die in einer Zeichnung dargestellt sind, näher erläutert.

Es zeigt:

Fig. 1 eine Demontagevorrichtung mit einem Kniehebel in einer Seitenansicht,

Fig. 2 die Demontagevorrichtung gemäß Fig. 1 in einer Draufsicht,

Fig. 3 eine Demontagevorrichtung mit einer antreibbaren Rolle und einem Demontagehaken (Prinzipskizze).

Ein Fahrzeugrad, bei dem die Demontagevorrichtung zum Einsatz kommt, besteht aus dem zu demontierenden Reifen 1, der mit seinen Wülsten 2 am radial inneren Umfang einer starren, einteiligen Felge 3 befestigt ist. Dabei befinden sich die Wülste 2, die zug- und druckfeste Kernringe 4 in sich tragen, auf achsparallelen oder leicht geneigten Felgensitzflächen 5, die neben sich im wesentlichen nach radial innen erstreckenden Felgenhörnern 6 liegen. Nach axial innen schließt sich den Felgensitzflächen 5 ein Montagehochbett 7 an, das durch einen gegenüber den Sitzflächen 5 wesentlich vergrößerten Durchmesser gekennzeichnet ist und in dessen Bereich sich die Radscheibe 8 der Felge 3 befindet.

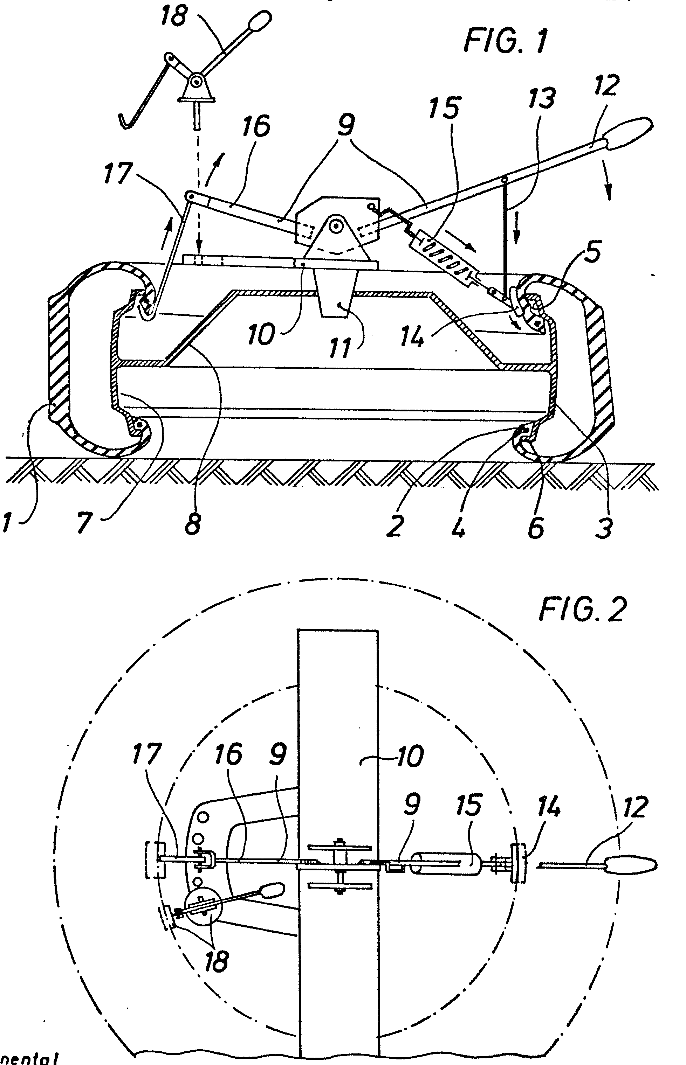

Eine Reifendemontagevorrichtung gemäß Fig. 1 und 2, bei der ein Kniehebel 9 auf einem Traggestell 10 befestigt ist, wird zunächst auf ein waagerecht liegendes Fahrzeugrad aufgesetzt. Dabei kann ein Zentrierelement 11 am Traggestell 10 für eine exakte Positionierung dienen, und es können Mittel zur Fixierung vorhanden sein. Am Bedienungsarm 12 des Kniehebels 9 befindet sich eine nach unten weisende Schubstange 13, die an ihrem anderen Ende einen Demontagelöffel 14 trägt. Eine Ausgleichsfeder 15, die zwischen dem Demontagelöffel 14 und einem Flansch des Traggestells 10 eingespannt ist und überwiegend als Druckfeder wirkt, sorgt dafür, daß der Demontagelöffel 14 mit einer ausreichenden Kraft gegen den Reifenwulst 2 gedrückt wird.

Am Lastarm 16 des Kniehebels 9 ist ein Demontagehaken 17 angelenkt. In der Nähe dieses Hakens 17 kann sich ein am Traggestell 10 befestigter kleinerer Zusatzkniehebel 18 befinden. Der Abstand zwischen dem Demontagehaken 17 und dem Zusatzkniehebel 18 sollte derart gewählt sein, daß beide mit der Radachse einen Winkel von ca. 15$^{o}$ einschließen.

Die Längen von Bedienungsarm 12 und Lastarm 16, Schubstange 13, Ausgleichsfeder 15 (mit Stange) und Demontagehaken 17 sowie die Befestigungspunkte der Schubstange 13, der Ausgleichsfeder 15 und des Demontagehakens 16 sind in der Weise aufeinander abgestimmt, daß folgender Bewegungsablauf beim Niederdrücken des Bedienungsarms 12 stattfindet. Am Anfang wird mit Hilfe der Schubstange 13 und der Ausgleichsfeder 15 der Demontagelöffel 14 gegen den Reifenwulst 2 bzw. die untere Reifenseitenwand im Bereich des Felgenhorns 6 gedrückt. Bei der Abwärtsbewegung des Bedienungsarms 12 wird ein Abschnitt des Reifenwulstes 2 allmählich in das Montagehochbett 7 verschoben. Wenn dieser Abschnitt zumindest teilweise in das Montagehochbett 7 eingedrungen ist, kommt am gegenüberliegenden Wulstabschnitt, der sich zwischenzeitlich von seiner Sitzfläche 5 gelockert hat, der Demontagehaken 17 in Eingriff, und im Verlauf der weiteren Abwärtsbewegung des Bedienungsarms 12 zieht der Montagehaken 17 den zweiten Wulstabschnitt wulstschonend über das Felgenhorn 6. Schließlich kann bei Bedarf der zusätzliche Kniehebel 18 zum Einsatz kommen, mit dem der demontierte Umfangsabschnitt des Wulstes 2 so stark vergrößert wird, daß danach der gesamte Wulst 2 von Hand oder mit anderen Hilfsmitteln leicht von der Felge 3 gezogen werden kann.

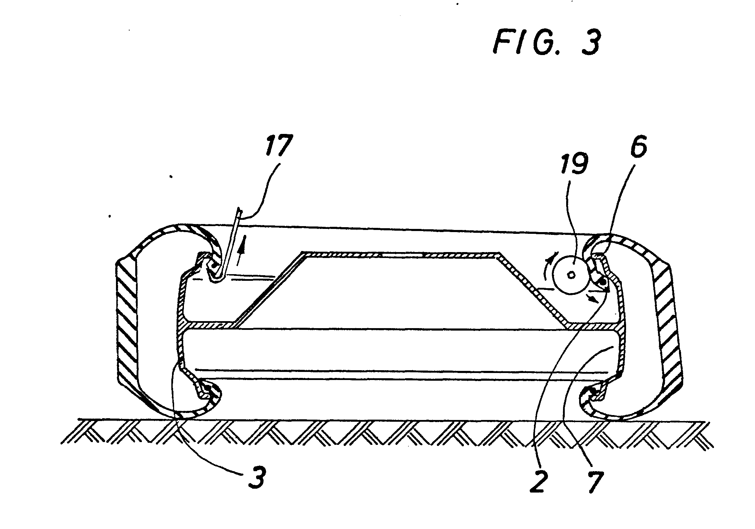

In Fig. 3 ist schematisch ein Ausführungsbeispiel dargestellt, bei dem statt eines Demontagelöffels eine antreibbare Rolle 19 an einem ersten Wulstabschnitt angreift und diesen in das Montagehochbett 7 drückt. Verschiedene Ausführungsarten einer antreibbaren Rolle 19 sind bereits in einer älteren Patentanmeldung beschrieben worden. Nachdem durch die Rolle 19 der erste Wulstabschnitt in das Hochbett 7 gedrückt und auf der gegenüberliegenden Seite der zweite Wulstabschnitt von der Felge 3 gelockert worden ist, kann wieder ein Demontagehaken 17 angreifen, der z. B. hydraulisch betätigbar ist und der, ebenso wie die antreibbare Rolle 19, in eine Montagevorrichtung integriert sein kann.

Zusammenfassend ist festzustellen, daß es für das erfindungsgemäße Verfahren entscheidend darauf ankommt, daß zunächst ein Reifenwulstabschnitt in das Montagehochbett 7 gedrückt wird und daß erst danach der gegenüberliegende Wulstabschnitt über das Felgenhorn 6 gehoben wird.

0170124

<u>Patentansprüche</u>

1. Verfahren zur Demontage von Fahrzeugluftreifen, deren Wülste sich im montierten Zustand am radial inneren Umfang der Felge befinden, die ein Montagehochbett und seitlich außen sich im wesentlichen nach radial innen erstreckende Felgenhörner aufweist, dadurch gekennzeichnet, daß zunächst ein Abschnitt eines Reifenwulstes in das Montagehochbett gedrückt wird und daß danach der gegenüberliegende Abschnitt desselben Reifenwulstes über das Felgenhorn gehoben wird.

2. Verfahren nach Anspruch 1, dadurch gekennzeichnet, daß das Hineindrücken des Wulstes in das Montagehochbett und das Überwinden des Felgenhorns mit Hilfe eines einzigen Bewegungsablaufs erfolgt.

3. Verfahren nach Anspruch 2, dadurch gekennzeichnet, daß der Bewegungsablauf aus einem manuellen Hinunterdrücken eines Hebels besteht.

4. Vorrichtung zur Durchführung des Verfahrens nach Anspruch 1, gekennzeichnet durch ein Mittel (14, 19) zum Hineindrücken eines Reifenwulstes in das Montagehochbett und durch ein weiteres Mittel (17) zum Anheben des gegenüberliegenden Reifenwulstabschnittes über das Felgenhorn.

5. Vorrichtung nach Anspruch 4, gekennzeichnet durch einen auf einem Traggestell (10) montierten, hinunterdrückbaren Kniehebel (9) an dessen Bedienungsarm (12) eine Schubstange (13) mit einem Demontagelöffel (14) und an dessen anderem Arm (16) ein Demontagehaken (17) befestigt ist.

6. Vorrichtung nach Anspruch 5, dadurch gekennzeichnet, daß an dem Demontagelöffel (14) eine überwiegend nach radial außen wirkende Druckfeder (15) angreift.

0170124

7. Vorrichtung nach Anspruch 5, gekennzeichnet durch einen in der Nähe des Demontagehakens (17) angebrachten kleineren Zusatzkniehebel (18).

8. Vorrichtung nach Anspruch 5, gekennzeichnet durch ein am Traggestell (10) befindliches Fixierungs- oder Zentrierungsmittel (11).

9. Vorrichtung nach Anspruch 4, dadurch gekennzeichnet, daß eine antreibbare Rolle (19) als Mittel zum Hineindrücken eines Reifenwulstes in das Montagehochbett dient.

Hannover, den 25. Juli 1984
3563                    Sr/Lu

FIG. 1

FIG. 2

0170124

Continental
Gummi-Werke AG

0170124

## FIG. 3

Continental
Gummi - Werke AG
Hannover